Europäisches Patentamt

European Patent Office

Office européen des brevets

(11) Publication number : **0 496 502 A2**

# (12) EUROPEAN PATENT APPLICATION

(21) Application number : **92300179.6**

(22) Date of filing : **09.01.92**

(51) Int. Cl.⁵ : **H04N 1/00**

(30) Priority : **24.01.91 JP 7259/91**

(43) Date of publication of application :
**29.07.92 Bulletin 92/31**

(84) Designated Contracting States :
**DE FR GB IT NL**

(71) Applicant : **ROHM CO., LTD.**
**21, Saiin Mizosaki-cho Ukyo-ku**
**Kyoto-shi Kyoto 615 (JP)**

(72) Inventor : **Ogata, Hiromi**
**21 Saiin Mizosaki-cho, Ukyo-ku**
**Kyoto-shi, Kyoto (JP)**
Inventor : **Kihara, Osamu c/o Rohm Co., Ltd.,**
**21 Saiin Mizosaki-cho, Ukyo-ku**
**Kyoto-shi, Kyoto (JP)**
Inventor : **Sawase, Kensuke**
**21 Saiin Mizosaki-cho, Ukyo-ku**
**Kyoto-shi, Kyoto (JP)**

(74) Representative : **Cross, Rupert Edward Blount**
**et al**
**BOULT, WADE & TENNANT 27 Furnival Street**
**London EC4A 1PQ (GB)**

(54) **Portable facsimile machine.**

(57) A portable facsimile machine for exclusively transmitting image data, in which an image sensor reads the content of a manuscript and outputs image data, and the image data are processed by an image processor and are then modulated by a modem to output image signals for communication, and in which the image signals are sent out either directly to a telephone line or via an acoustic coupler and a telephone.

EP 0 496 502 A2

The present invention relates to a portable facsimile machine for reading the content of a manuscript and transmitting its image data to a communication line.

A facsimile machine for communicating image data through a communication line has been widely used in offices and homes, and its uses have been expanded.

Conventional facsimile machines are of a desktop type, and such machines can carry out, both the sending and receiving operation. In the conventional facsimile machines, the content of a manuscript is read by an image sensor portion and is converted into image data therein. In this instance, the image sensor portion comprises, for example, a line type of CCD (charge-coupled device) to convert the shade level of the manuscript into the brightness level.

The obtained image data are processed in a predetermined manner by an image processing section, and, after further modulating of the data by a modem portion, the obtained signals are sent out to a telephone line via an NCU (network control unit).

On the other hand, the image signals received from the telephone line through the NCU are firstly demodulated by the modem portion, and, after processing the demodulated signals in the desired way by the image processing section, the obtained image data are sent to a printing unit. In the conventional facsimile machine providing with heat sensitive paper roll, the printing unit prints a picture image onto heat sensitive paper fed from the paper roll.

As described above, since the conventional facsimile machine includes the heat sensitive paper roll and the printing unit, it is large in size and heavy.

Recently, the uses for facsimile machines have been expanded, and an easily portable facsimile machine capable of readily transmitting the manuscript to be sent has been in demand.

However, the conventional facsimile machine is large in size and heavy, so it is inconvenient to carry it. Further, it is impossible to use the facsimile machine in a place having no AC power outlet.

In accordance with one aspect of the present invention, there is provided a facsimile machine exclusively for the transmission of image data, comprising image sensor means for optically reading the content of a manuscript and outputting the image data; image processor means for processing the image data fed from the image sensor means; mdoulator means for modulating the processed image data output from the image processor means to output image signals for communication; and a power source for supplying an electric power to the respective means.

According to the present invention, since the components for receiving or printing are omitted, the portable facsimile machine becomes small in size and lightweight and can be readily carried. Further, by providing a power source such as a battery, the portable facsimile machine can be operated anywhere, for example, on a train or in an automobile with a telephone, in a hotel room, in a public telephone station or box and the like without requiring an external AC power source.

This can be achieved by removing the need for facsimile receiving functions such as a heat sensitive paper roll, a printing unit and the like.

Further, when an acoustic coupler is provided, by connecting the acoustic coupler to a telephone, the portable facsimile machine can be connected to a telephone line without any particular connection wiring and facsimile transmission can be readily carried out.

Examples of the present invention will now be described with reference to the drawings, in which:-

Fig. 1 is a block diagram showing a first embodiment of a portable facsimile machine according to the present invention; and

Fig. 2 is a block diagram showing a second embodiment of a portable facsimile machine according to the present invention.

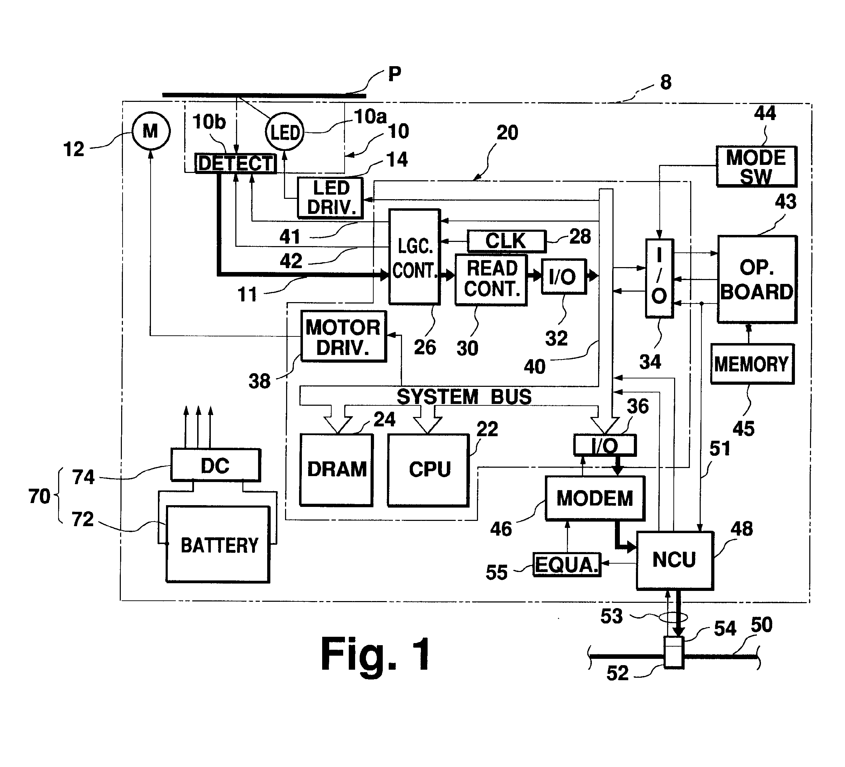

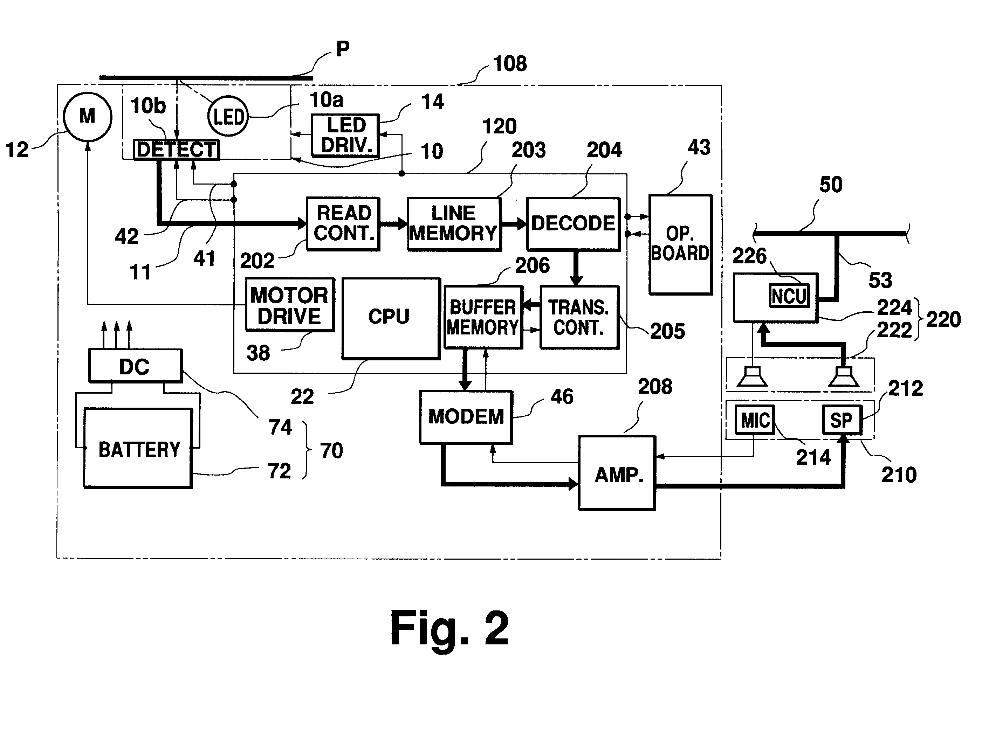

The present invention will now be described in connection with its preferred embodiments with reference to the attached drawings, wherein like reference characters designate like or corresponding parts throughout the views and thus the repeated description thereof can be omitted for brevity. In Figs. 1 and 2, flows of image data or image signals are shown by thick arrow lines.

There is shown in Fig. 1 the first embodiment of a portable facsimile machine according to the present invention. In Fig. 1, a case 8 contains all component parts, as hereinafter described in detail.

An image sensor unit 10 is composed of an LED (light-emitting diode) 10a and a detector 10b, for example, an image pickup element such as a CCD. The light emitted by the LED 10a is reflected by a manuscript P, and the reflected light is detected by the detector 10b. Hence, the image sensor unit 10 optically reads the content of the manuscript P and outputs image data 11 representing the brightness levels of pixels.

A motor 12 moves the manuscript P. The image sensor unit 10 reads the manuscript P one line at a time, and the motor 12 sends the manuscript P step by step for one dot in the direction perpendicular to the line soon after the reading of one line is finished. This operation is repeated. An LED driver 14 supplies the electric power to the LED 10a.

The image data 11 are input from the image sensor unit 10 to an image processor section 20. The image processor section 20 includes a main CPU 22, a DRAM 24, a logic controller 26, a clock generator 28, a read controller 30, I/O circuits 32, 34 and 36, a motor driver 38 and a system bus 40.

The image processor section 20 carries out control of the manuscript reading of the image sensor unit 10, drive control of the motor 12, and so forth, in addition to the image processing. The main CPU 22 controls all the component parts of the image processor section 20.

The logic controller 26 feeds a control signal 41 and a clock signal 42 to the detector 10b according to control instructions sent from the main CPU 22 through the system bus 40, and as a result, the image data 11 are output from the detector 10b according to a predetermined timing.

The image data 11 are sent to the I/O circuit 32 including an A/D converter via the read controller 30 and are converted into digital signals in the I/O circuit 32. The obtained digital image data are fed to the main CPU 22 through the system bus 40, and the main CPU 22 stores the received digital image data in the DRAM 24. The main CPU 22 also carries out a compression of the image data, insertion of a parity bit and the like. To the system bus 40, an operation board 43 and a mode switch 44 are connected through the I/O circuit 34.

By a command input from the operation board 43, the main CPU 22 controls the operation of the logic controller 26, The mode switch 44 is formed with a mode selector for selecting either a hoop disconnect signal or a DTMF (dual tone multifrequency) signal as the dial signal to be sent to a telephone line and a frequency selector for selecting the frequency of the clock signal,

The operation board 43 having various operational switches is connected to a memory 45, and by inputting a predetermined instruction from the operation board 43, a telephone number of a sending destination such as clients or the like stored in the memory 45 is automatically output.

To the system bus 40, a modem 46 adaptable to the standard of GIII is connected through the I/O circuit 36. The modem 46 modulates the image data fed through the system bus 40 to output image signals to be sent out to the telephone line for communication.

The image signals output from the modem 46 are sent out to the telephone line 50 through an NCU (network control unit) 48. The connection between the facsimile machine and the telephone line 50 is achieved by putting a plug 54 attached to the end of a cable 53 coupled to the NCU 48 into a jack 52 connected to the telephone line 50.

A dial signal 51 is directly fed from the operation board 43 to the NCU 48, and the NCU 48 outputs either the DTMF signal or the hoop disconnect signal prior to the sending of the image signals to the telephone line 50. In Fig. 1, an equalizer 55 is connected between the NCU 48 and the modem 46.

A power unit 70 includes a battery 72 and a voltage converter (DC) 74 and supplies the desired voltage to the constituent parts. The battery 72 is of a re-chargeable type.

Next, the sending operation of the facsimile described above will now be described in detail.

First, the manuscript P is placed at the predetermined position on the facsimle machine. The sending destination is input from the operation board 43 to the facsimle machine, and a sending execution instruction is input from the operation board 43.

As a result of this sending execution instruction, the NCU 48 enters an off-hook state, and the dial signal is then sent out to the telephone line 50. Then, the sending destination enters the off-hook state, and, when a closed loop communication path is formed between the two stations, the NCU 48 gives indication of a line connection to the main CPU 22. The main CPU 22 carries out preprocessing such as handshaking and the like for the facsimile transmission.

After the preprocessing is finished and preparations for image sending are complete, the main CPU 22 feeds the control signals to the LED driver 14, the logic controller 26 and the motor driver 38. Accordingly, the LED 10a emits light to the manuscript P, and the light reflected by the manuscript P is detected by the detector 10b. The detector 10b outputs the image data 11 to the image processor section 20.

The image data 11 are controlled by the main CPU 22 so as to be stored in the DRAM 24. Then, the main CPU 22 reads the image data 11 out of the DRAM 24, and the image data are sent to the modem 46 through the I/O circuit 36. The modem 46 modulates the image data to output the image signals to the telephone line 50 via the NCU 48. As a result, the image signals are received by the facsimle at the remote destination via the telephone line 50.

As described above, in this embodiment, the facsimile machine for exclusively sending or transmitting is obtained, and, since no structure is provided for facsimile receiving functions such as a heat sensitive paper roll, a thermal printer or the like, the facsimile machine is small in sized and lightweight. Further, in this facsimile machine, power consumption is small.

Furthermore, in this case, the facsimile machine has the battery 72 and hence can be used without the need to be positioned near an AC power source, and is good for portable use.

There is shown in Fig. 2 the second embodiment of a portable facsimile machine for exclusively sending or transmitting according to the present invention, having a similar structure as the first embodiment shown in Fig. 1, except that an acoustic coupler 210 is used for connecting with the telephone line 50.

In this embodiment, as shown in Fig. 2, a case 108, contains an image processor section 120 which comprises a read controller 202, a line memory 203, a decoder 204, a transmission controller 205, a buffer memory 206, a motor driver 38 and a main CPU 22. In Fig. 2, in the image processor section 120, the flow of image data processing is mainly shown, and a system bus, I/O circuits and the like are omitted for brevity. The main CPU 22 controls all the constituent parts of the image processor section 20 in the same manner as the first embodiment described above.

In Fig. 2, the read controller 202 receives the image data 11 from the image sensor unit 10 and converts the image data 11 into digital image data. The digital image data are stored one line at a time in the line memory 203 and are then read out of the line memory 203 at a predetermined timing.

The digital image data read out of the line memory 203 are sent to the buffer memory 206 through the decoder 204 and the transmission controller 205 and are stored in the buffer memory 206. The image data read out of the buffer memory 206 are fed to a modem 46, and the modem modulates the image date to output the image signals for communication.

The modem 46 is connected to the acoustic coupler 210 via an amplifier 208. The acoustic coupler 210 includes a speaker 212 and a microphone 214 and is coupled with a hand set 222 of a telephone 220. In the telephone 220, a main body 224 includes an NCU 226 connected to the telephone line 50 through a cable 53. Hence, in this case, dialing to a sending destination station prior to the sending of the facsimile is carried out by the telephone 220 which is separated from the facsimile machine.

Next, the operation for sending the facsimile described above will now be described in detail.

When the image sending is carried out, a telephone call to a sending destination station is made by using the telephone 220. After the telephone line is connected, a transmission key on the operation board 43 is switched on to send an image sending instruction to the image processor section 120. On receipt of this instruction, the image processor section 120 drives the image sensor unit 10 and the motor 12 to execute the reading of the content of the manuscript P. The image data 11 picked up by the detector 10b are fed to the modem 46 through the image processor section 120.

The modem 46 modulates the image data to output the image signals to the amplifier 208, and the image signals amplified in the amplifier 208 are sent to the speaker 212 of the acoustic coupler 210. The image signals are changed into sounds in the speaker 212, and the sounds are detected by a microphone of the handset 222 to re-obtain the image signals. The image signals are then sent out to the telephone line 50 through the NCU 226, and the facsimile machine of the destination station receives the image signals via the telephone line 50.

In this embodiment, in the handshaking with reference to the destination station, the signals sent from the destination station are input to the facsimile machine through the microphone 214 of the handset 222 in the telephone 220. In this instance, the amplifier 208 amplifies the signals fed from the microphone 214 of the acoustic coupler 210 to the modem 46.

As described above, in the second embodiment of the present invention, when there is a telephone, the facsimile transmission can be readily carried out, and it is more convenient than the first embodiment of the present invention. However, in the first embodiment of the present invention, since the image signals are directly sent from the facsimile machine to the telephone line 50 without using an acoustic coupler, the facsimile machine sending can be carried out at a faster transmission speed than that of the second embodiment.

According to the present invention, as described above, the portable facsimile machine for exclusively sending or transmitting is small in sized and lightweight and thus the sending of the facsimile can be readily carried out in any place with a telephone or a telephone line outlet, for example, a train, an automobile with a telephone, a room in a hotel, a public telephone station or box and the like.

## Claims

1. A facsimile machine for exclusively transmitting image data, comprising:

    image sensor means for optically reading the content of a manuscript and outputting the image data;

    image processor means for processing the image data fed from the image sensor means;

    modulator means for modulating the processed image data output from the image processor means to output image signals for communication; and

    a power source for supplying electric power to the means.

2. The facsimile machine of claim 1, wherein the image signals are sent out to a telephone line having a jack through a cable having a plug to be put into the jack of the telephone line.

3. The facsimile machine of claim 1, wherein the modulator means is a modem.

4. A facsimile machine for exclusively transmitting image data, comprising:

    image sensor means for optically reading the content of a manuscript and outputting the image data;

    image processor means for processing the image data fed from the image sensor means;

    modulator means for modulating the processed image data output from the image processor means to output image signals for communication;

    a power source for supplying electric power to the means; and

acoustic coupler means for changing the image signals fed from the modulator means into sounds and outputting the sounds to a handset of a telephone.

5. The facsimile machine of claim 4, wherein the modulator means is a modem.

Fig. 1

Fig. 2

EP 0 496 502 A2